# EUROPÄISCHE PATENTSCHRIFT

(11) **EP 3 589 857 B1**
(45) Veröffentlichungstag und Bekanntmachung des Hinweises auf die Patenterteilung: **24.02.2021**
(21) Anmeldenummer: 17709410.9
(22) Anmeldetag: 03.03.2017
(51) Int. Cl.: F16D 48/06

(54) **VERFAHREN UND VORRICHTUNG ZUM BETRIEB EINES ANTRIEBSSTRANGES**
METHOD AND DEVICE FOR OPERATING A DRIVETRAIN
PROCÉDÉ ET DISPOSITIF POUR FAIRE FONCTIONNER UN CHAÎNE CINÉMATIQUE

(43) Veröffentlichungstag der Anmeldung: 08.01.2020
(73) Patentinhaber: GKN Automotive Ltd., West Midlands, B37 7YE (GB)
(72) Erfinder: SEIDL, Holger, 53721 Siegburg (DE)
(74) Vertreter: karo IP
(86) Internationale Anmeldenummer: PCT/EP2017/055089
(87) Internationale Veröffentlichungsnummer: WO 2018/157950

(56) Entgegenhaltungen:
- DE-A1-102009 043 243
- US-A1- 2014 371 998
- US-A1- 2015 266 468

## Beschreibung

Die vorliegende Erfindung betrifft ein Verfahren und eine Vorrichtung zum Betrieb eines Antriebsstranges eines Fahrzeugs, insbesondere eines Kraftfahrzeuges. Der Antriebsstrang umfasst zumindest ein Getriebegehäuse und ein darin angeordnetes Kupplungsaggregat mit einer formschlüssig wirkenden Kupplung sowie eine Betätigungseinheit zur Betätigung der Kupplung und einen Sensor zur Ermittlung des Kupplungszustands. Die Kupplung umfasst zumindest eine erste Kupplungskomponente und eine zweite Kupplungskomponente, die bei Betätigung der Kupplung formschlüssig miteinander verbunden werden. Ein derartiger Antriebsstrang ist insbesondere zur Verbindung einer elektrischen Maschine mit einer Antriebswelle des Fahrzeugs vorgesehen. Dabei kann über die Antriebswelle eine Antriebsleistung der elektrischen Maschine z. B. auf Räder des Fahrzeugs zum Antrieb des Fahrzeugs übertragen werden.

Die Betätigungseinheit umfasst einen elektromagnetischen Aktuator mit einem Kolben, wobei der Kolben zur Betätigung der Kupplung aus einer Ausgangsposition in eine Endposition verlagert wird. Zumindest der Kolben und die Kupplung werden zumindest teilweise von einem Getriebefluid beaufschlagt. Eine Übertragung eines Drehmomentes über die Kupplungskomponenten soll erst nach Feststellung eines vollständig eingerückten ersten Zustandes der Kupplungskomponenten erfolgen, für den der Kolben in der Endposition angeordnet ist; wobei über den Sensor eine Lage des Kolbens feststellbar ist. Bei Antriebssträngen dieser Bauart befinden sich zumindest der Kolben und die Kupplung zumindest teilweise (oder auch vollständig) in einem Getriebefluid, insbesondere einem Öl. Dabei weist das Getriebefluid eine temperaturabhängige Viskosität auf, wobei die Bewegung des Kolbens und/oder die Verlagerung der Kupplungskomponenten durch die Viskosität beeinflusst werden kann. Es hat sich nunmehr herausgestellt, dass die Sensoren ebenfalls temperaturabhängige Sensormesswerte generieren, so dass eine (genaue) Bestimmung einer Lage des Kolbens unabhängig von der Temperatur nicht erfolgen kann.

Die Kupplung wird im Allgemeinen erst zur Übertragung von Drehmomenten eingesetzt, wenn die Kupplungskomponenten vollständig eingerückt sind und eine gesicherte formschlüssige Verbindung miteinander ausbilden (erster Zustand der Kupplungskomponenten). Um sicherzugehen, dass dieser erste Zustand tatsächlich vorliegt, musste bislang die Bewegung des Kolbens abgeschätzt und nach Betätigen des Aktuators und Bewegen des Kolbens aus der Ausgangsposition, eine (vorbestimmte) zusätzliche Zeit abgewartet werden.

Vorliegend soll der Einsatz eines Temperatursensors in dem Getriebegehäuse vermieden werden. Der Einbau eines Temperatursensors zur Ermittlung der Temperatur und eine dadurch mögliche Kompensation des Temperatureinflusses bei Betätigung des Aktuators ist mit zusätzlichen Kosten und einem erhöhten Bauraum verbunden, was eingespart werden soll. Auch die Erstellung eines Temperaturmodells, unter Berücksichtigung des Energieeintrags in das Getriebe, ist aufwendig und zudem nur ungenau.

Aufgabe der Erfindung ist es daher, die mit Bezug auf den Stand der Technik beschriebenen Probleme zumindest teilweise zu lösen und insbesondere ein Verfahren und eine Vorrichtung bereitzustellen, welche die Kupplung schneller betätigen können. Damit soll insbesondere ein Antriebsstrang bereitgestellt werden, bei dem ein Drehmoment schneller über die Kupplung übertragen und den Rädern bereitgestellt werden kann. Stand der Technik ist DE 10 2009 043 243.

Diese Aufgaben werden gelöst mit einem Verfahren gemäß den Merkmalen des Patentanspruchs 1. Weitere vorteilhafte Ausgestaltungen des Verfahrens und einer Vorrichtung sind in den weiteren Patentansprüchen angegeben. Es ist darauf hinzuweisen, dass die in den abhängigen Patentansprüchen einzeln aufgeführten Merkmale in technologisch sinnvoller Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Es wird ein Verfahren zum Betrieb eines Antriebsstranges eines Fahrzeugs vorgeschlagen, wobei der Antriebstrang zumindest ein Getriebegehäuse und ein darin angeordnetes Kupplungsaggregat mit einer formschlüssig wirkenden Kupplung sowie eine Betätigungseinheit zur Betätigung der Kupplung und einen Sensor zur Ermittlung des Kupplungszustands aufweist, wobei mit dem Sensor eine Lage des Kolbens feststellbar ist. Die Kupplung (z. B. eine Klauenkupplung) umfasst zumindest eine erste Kupplungskomponente und eine zweite Kupplungskomponente, die bei Betätigung der Kupplung formschlüssig miteinander verbunden werden. Die Betätigungseinheit umfasst einen elektromagnetischen Aktuator mit einem Kolben, wobei der Kolben zur Betätigung der Kupplung aus einer Ausgangsposition in eine Endposition verlagert wird. Zumindest der Kolben und die Kupplung werden zumindest teilweise von einem Getriebefluid beaufschlagt. Eine Übertragung eines Drehmomentes über die Kupplungskomponenten erfolgt erst nach Feststellung eines vollständig eingerückten ersten Zustandes der Kupplungskomponenten, wobei bei diesem ersten Zustand der Kolben in der Endposition angeordnet ist.

Das Verfahren umfasst zumindest die folgenden Schritte:
a) Betätigen des Aktuators und Bewegen des Kolbens aus der Ausgangsposition;
b) Ermitteln eines Sensormesswertes;
c) Ermitteln einer Temperatur des Getriebefluids;
d) Bestimmen einer Ist-Position des Kolbens anhand des Sensormesswertes und der Temperatur; und
e) ausgehend von der bestimmten Ist-Position Bewegen des Kolbens in die Endposition;
wobei die Temperatur des Getriebefluids zumindest durch
i. Messen eines elektrischen Widerstands des Aktuators oder
ii. Messen eines ersten Zeitintervalls zwischen Betätigen des Aktuators gemäß Schritt a) und dem Detektieren einer von dem Kolben erreichten Zwischenposition durch den Sensor
ermittelt wird.

Die Verfahrensschritte a) bis e) können in der vorgeschlagenen Reihenfolge durchgeführt werden. Es ist möglich, dass die Verfahrensschritte teilweise oder vollständig einander zeitlich überlagernd ausgeführt werden. Die Prozesse i. und/oder ii. können während Schritt c) ausgeführt bzw. von Schritt c) ausgelöst werden. Es ist bevorzugt, dass nach Schritt a) alle weiteren Schritte und mindestens einer der Prozesse i. und ii. ausgeführt werden. Es ist bevorzugt, dass für jede im Antriebsstrang ausgelöste Betätigung des Aktuators und/oder Bewegung des Kolbens aus der Ausgangsposition das hier vorgeschlagene Verfahren ausgeführt wird.

Insbesondere bewegen sich zumindest Teile der Kupplung sowie der Kolben der Betätigungseinheit mittels des Getriebefluids bzw. werden durch das Getriebefluid beaufschlagt. Damit bestimmt insbesondere bzw. vorrangig auch die (aktuelle) Viskosität des Getriebefluids die (tatsächliche) Schaltzeit der Kupplung. Zudem ist der Sensor aus dem Betrieb des Getriebes und/oder der Kupplung resultierenden Temperaturschwankungen ausgesetzt und generiert somit temperaturabhängig variierende Sensormesswerte für selbe Zustände.

Insbesondere umfasst der elektromagnetische Aktuator eine Spule, die zur Verlagerung des Kolbens mit einem elektrischen Strom beaufschlagt wird. Es wird vorgeschlagen, die Spule des Aktuators als Temperatursensor zu verwenden bzw. einzusetzen. Dabei kann ausgenutzt werden, dass sich ein elektrischer Widerstand der Spule in Abhängigkeit von der Temperatur verändert (Prozess i. des Verfahrens). Diese Temperaturabhängigkeit kann z. B. experimentell ermittelt und in einem Kennfeld für das Verfahren hinterlegt werden.

Der Aktuator kann so angeordnet sein, dass die Temperatur der Spule zumindest weitgehend der Temperatur des Getriebefluids entspricht und/oder sich diese Temperaturen etwa gleichartig ändern. Somit kann aus der Temperatur der Spule auf die Temperatur des Getriebefluids geschlossen werden. Der in Schritt b) ermittelte (temperaturabhängige) Sensormesswert kann in Kenntnis der in Schritt c) ermittelten Temperatur interpretiert werden. Über die in Schritt c) ermittelte Temperatur kann die Viskosität des Getriebefluids bestimmt werden. Dies ermöglicht, dass die Geschwindigkeit der durch das Getriebefluid bewegten Komponenten Kolben und/oder Kupplung (genau) ermittelt werden. Damit ist, ausgehend von der Ist-Position des Kolbens (Schritt d)), ein zweites Zeitintervall bestimmbar, nach dem der Kolben, ausgehend von der Ist-Position, die Endposition erreicht.

Der Kolben kann somit aus einer genau(-er) bestimmten Ist-Position weiter in die vorbestimmte Endposition verlagert werden. Dabei kann die Geschwindigkeit des Kolbens in Abhängigkeit von der ermittelten Temperatur bestimmt werden. Das Erreichen des ersten Zustands kann daher mit einer erhöhten Genauigkeit bestimmt werden, so dass die Freigabe zur Übertragung eines Drehmoments über die Kupplungskomponenten nun schneller erfolgen kann.

Gemäß Prozess ii. des Verfahrens wird die Temperatur des Getriebefluids (Schritt c)) anhand eines ersten Zeitintervalls zwischen Betätigen des Aktuators gemäß Schritt a) und dem Detektieren einer von dem Kolben erreichten Zwischenposition durch den Sensor ermittelt. Es ist hierfür insbesondere vorgesehen, dass das erste Zeitintervall in Abhängigkeit von der Viskosität des Getriebefluids (und damit von der Temperatur des Getriebefluids) variiert.

Insbesondere ist die Variation des ersten Zeitintervalls in Abhängigkeit von der Temperatur des Getriebefluids deutlich stärker als die Variation des ersten Zeitintervalls in Abhängigkeit von der temperaturabhängigen Messgenauigkeit des Sensors. Dadurch kann für den Schritt d) die Ist-Position des Kolbens mit hinreichender Genauigkeit bestimmt werden, wobei der in Schritt b) ermittelte (temperaturabhängige) Sensormesswert in Kenntnis der in Schritt c) ermittelten Temperatur interpretiert wird.

Die Prozesse i. und ii. des Verfahrens können parallel zueinander (gleichzeitig und/oder nacheinander) ausgeführt werden, so dass die jeweils ermittelten Ergebnisse dieser Prozesse für die Ist-Position auf ihre Plausibilität überprüft werden können.

Bevorzugt wird der Sensormesswert kontinuierlich während der Verlagerung des Kolbens ermittelt. "Kontinuierlich" heißt in diesem Zusammenhang insbesondere andauernd und/oder mit einer hohen Wiederholfrequenz, so dass während der Verlagerung des Kolbens eine Vielzahl von Sensormesswerten ermittelt werden.

Insbesondere wird die Ist-Position des Kolbens in Schritt d) aus einem Kennfeld bestimmt. Insbesondere sind in dem Kennfeld Korrekturfaktoren für die Sensormesswerte in Abhängigkeit von der Temperatur hinterlegt. Damit kann der in Schritt b) ermittelte Sensormesswert interpretiert und die Ist-Position des Kolbens mit höherer Genauigkeit bestimmt werden.

Insbesondere ist für den (in Schritt b) ermittelten, temperaturabhängigen) Sensormesswert ein Schwellwert definiert, wobei, wenn der in Schritt b) ermittelte Sensormesswert dem Schwellwert entspricht, angenommen wird, das der Kolben aus der Ausgangsposition in die Zwischenposition verlagert ist, wobei die Kupplungskomponenten in der Zwischenposition (gerade noch) nicht formschlüssig miteinander verbunden sind. Dabei wird der Schwellwert insbesondere so festgelegt, dass einerseits eine formschlüssige Verbindung der Kupplungskomponenten in jedem Fall noch nicht vorliegt (gerade bei niedriger Temperatur) und andererseits (z. B. bei hoher Temperatur) eine formschlüssige Verbindung bei Überschreiten des Schwellwerts unmittelbar vorliegt.

Anhand der (in Schritt c) ermittelten Temperatur kann ein zweites Zeitintervall bestimmt werden, in dem der Kolben ausgehend von der Ist-Position die Endposition erreicht; wobei die Durchführung des Schrittes e) auf das zweite Zeitintervall abgestimmt wird. Damit kann der Kolben aus der genau(-er) bestimmten Ist-Position weiter in die Endposition verlagert werden, wobei die Geschwindigkeit des Kolbens ebenfalls in Abhängigkeit von der ermittelten Temperatur bestimmt werden kann. Das Erreichen des ersten Zustands kann mit einer erhöhten Genauigkeit bestimmt werden, so dass die Freigabe zur Übertragung eines Drehmoments über die Kupplungskomponenten nun schneller erfolgt.

Insbesondere wird das zweite Zeitintervall aus einem Kennfeld bestimmt. In diesem Kennfeld können Werte des zweiten Zeitintervalls in Abhängigkeit von der ermittelten Temperatur hinterlegt sein.

Weiter wird vorgeschlagen, dass der Aktuator zum Messen des elektrischen Widerstands des Aktuators (z. B. der Spule des Aktuators) mit einem Testsignal, umfassend einen elektrischen Strom und eine elektrische Spannung, beaufschlagt wird, wobei der Kolben durch das Testsignal nicht bewegt wird. Insbesondere sind der elektrische Strom und/oder die elektrische Spannung so niedrig bzw. die Beaufschlagung erfolgt mit einem Stromimpuls für einen so kurzen Zeitraum, dass der Kolben durch das Testsignal nicht bewegt bzw. verlagert wird. Aus der Messung des elektrischen Widerstands (Prozess i. des Verfahrens) kann die Temperatur des Getriebefluids hinreichend genau bestimmt werden.

Insbesondere kann die Steuereinheit, die für die Ausführung des Verfahrens im Kraftfahrzeug verantwortlich ist, "selbstlernend" ausgeführt sein. Zum Beispiel kann zu einem ersten Zeitpunkt (bei einer bekannten ersten Temperatur des Getriebefluids) ein Sensormesswert ermittelt werden, der dann vorliegt, wenn der Kolben die Endposition erreicht hat. Ist zu einem späteren zweiten Zeitpunkt die Temperatur des Getriebefluids bekannt, kann eine entsprechende Kennlinie des Sensors ausgewählt werden, so dass bei sich ändernder Temperatur ein dann für das Erreichen der Endposition identifizierter veränderter Sensormesswert herangezogen werden kann.

Es wird ein Antriebsstrang eines Kraftfahrzeuges vorgeschlagen, zumindest aufweisend ein Getriebegehäuse und ein darin angeordnetes Kupplungsaggregat mit einer formschlüssig wirkenden Kupplung sowie eine Betätigungseinheit zur Betätigung der Kupplung und einen Sensor zur Ermittlung des Kupplungszustands; wobei die Kupplung zumindest eine erste Kupplungskomponente und eine zweite Kupplungskomponente umfasst, die bei Betätigung der Kupplung formschlüssig miteinander verbindbar sind. Die Betätigungseinheit umfasst einen elektromagnetischen Aktuator mit einem Kolben; wobei der Kolben zur Betätigung der Kupplung aus einer Ausgangsposition in eine Endposition verlagerbar ist; wobei zumindest der Kolben und die Kupplung zumindest teilweise von einem Getriebefluid beaufschlagt sind. Eine Übertragung eines Drehmomentes über die Kupplungskomponenten erfolgt erst nach Feststellung eines vollständig eingerückten ersten Zustandes der Kupplungskomponenten, für den der Kolben in der Endposition angeordnet ist; wobei über den Sensor eine Lage des Kolbens feststellbar ist. Der Antriebsstrang ist zur Durchführung des Verfahrens nach einem der vorhergehenden Patentansprüche geeignet und eingerichtet bzw. kann das Verfahren durchführen.

Insbesondere ist zumindest eine Steuereinheit vorgesehen, die die Durchführung des Verfahrens initiiert und in der die angesprochenen Kennfelder hinterlegt sind. Die Ausführungen zu dem Verfahren gelten gleichermaßen für den Antriebsstrang und umgekehrt.

Vorsorglich sei angemerkt, dass die hier verwendeten Zahlwörter ("erste", "zweite", "dritte",...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Die Erfindung, sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Gleiche Bezugszeichen bezeichnen gleiche Gegenstände, so dass ggf. Erläuterungen aus anderen Figuren ergänzend herangezogen werden können. Es zeigen schematisch:
- Fig. 1:: eine Teilansicht eines Antriebstrangs in einer Seitenansicht im Schnitt; und
- Fig. 2:: ein Diagramm mit mehreren Kennlinien eines Sensors.

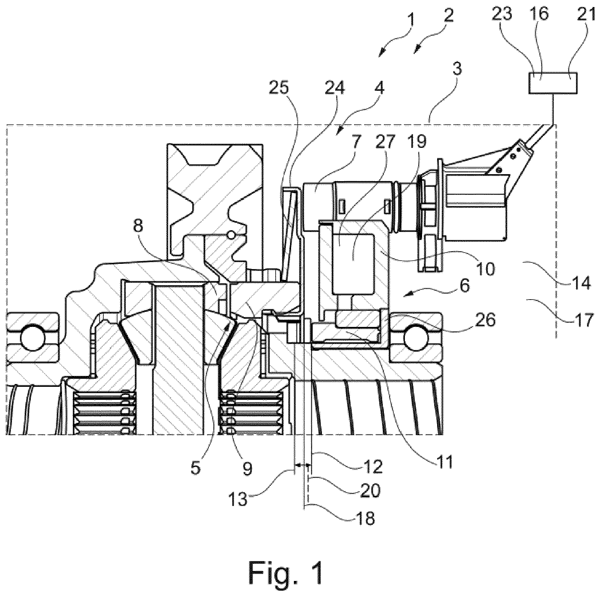

Fig. 1 zeigt eine Teilansicht eines Antriebstrangs 1 in einer Seitenansicht im Schnitt. Der Antriebsstrang 1 ist Teil eines Fahrzeugs 2. Der Antriebsstrang 1 umfasst ein Getriebegehäuse 3 und ein darin angeordnetes Kupplungsaggregat 4 mit einer formschlüssig wirkenden Kupplung 5 sowie eine Betätigungseinheit 6 zur Betätigung der Kupplung 5 und einen Sensor 7 zur Ermittlung des Kupplungszustands. Die Kupplung 5 umfasst eine erste Kupplungskomponente 8 und eine zweite Kupplungskomponente 9, die bei Betätigung der Kupplung 5 formschlüssig miteinander verbunden werden. Die Betätigungseinheit 6 umfasst einen elektromagnetischen Aktuator 10 mit einem Kolben 11, wobei der Kolben 11 zur Betätigung der Kupplung 5 aus einer Ausgangsposition 12 in eine Endposition 13 verlagert wird. Der Kolben 11 und die Kupplung 5 sind in einem Getriebefluid 14 angeordnet. Eine Übertragung eines Drehmomentes über die Kupplungskomponenten 8, 9 soll erst nach Feststellung eines vollständig eingerückten ersten Zustandes 15 (hier nicht gezeigt) der Kupplungskomponenten 8, 9 erfolgen, für den der Kolben 11 in der Endposition 13 angeordnet ist.

Hier wird durch den Kolben 11 die Gleitscheibe 26 und über die Gleitscheibe 26 die Sensorscheibe 24 verlagert. Der Sensor 7 erfasst die Lage der Sensorscheibe 24. Die Sensorscheibe 24 ist mit der zweiten Kupplungskomponente 11 verbunden, so dass über den Sensor 7 eine Lage des Kolbens 11 ermittelbar ist.

Über den Sensor 7 ist eine also Lage des Kolbens 11 bzw. der zweiten Kupplungskomponente 9 feststellbar. In Schritt a) des Verfahrens wird der Aktuator 10 betätigt und der Kolben 11 aus der dargestellten Ausgangsposition 12 in Richtung hin zur Endposition 13 bewegt. In einem Schritt b) wird ein Sensormesswert 16 ermittelt. In dem Schritt c) wird die Temperatur 17 des Getriebefluids 14 ermittelt. In Schritt d) wird eine Ist-Position 18 des Kolbens 11 (zwischen der Ausgangsposition 12 und der Endposition 13) anhand des Sensormesswertes 16 und der ermittelten Temperatur 17 bestimmt. In Schritt e) wird ausgehend von der bestimmten Ist-Position 18 der Kolben 11 in die Endposition 13 bewegt. Die Temperatur 17 des Getriebefluids 14 wird durch das Messen eines elektrischen Widerstands 19 der Spule 27 des Aktuators 10 oder durch das Messen eines ersten Zeitintervalls zwischen Betätigen des Aktuators 10 gemäß Schritt a) und dem Detektieren einer von dem Kolben 11 erreichten Zwischenposition 20 durch den Sensor 7 ermittelt.

Teile der Kupplung 5, z. B. die Kupplungskomponenten 8, 9, eine Sensorscheibe 24, eine als Rückstellfeder zur Rückführung der zweiten Kupplungskomponente 9 sowie des Kolbens 11 ausgeführte Tellerfeder 25, eine Gleitscheibe 26 sowie der Kolben 11 der Betätigungseinheit 6 sind durch das Getriebefluid 14 beaufschlagt bzw. werden durch das Getriebefluid 14 hindurch bewegt. Damit bestimmt die Viskosität des Getriebefluids 14 die Schaltzeit der Kupplung 5. Zudem generiert der Sensor 7 temperaturabhängige Sensormesswerte 16, so dass eine (genaue) Bestimmung einer Lage des Kolbens 11 durch den Sensor 7 unabhängig von der Temperatur 17 nicht erfolgen kann.

Der Aktuator 10 umfasst eine Spule 27, die zur Verlagerung des Kolbens 11 mit einem elektrischen Strom beaufschlagt wird. Hier wird die Spule 27 des Aktuators 10 als Temperatursensor verwendet. Dabei wird der Umstand ausgenutzt, dass sich in Abhängigkeit von der Temperatur 17 ein elektrischer Widerstand 19 der Spule 27 verändert (Variante i. des Verfahrens). Diese Temperaturabhängigkeit kann z. B. in einem Kennfeld 21 in einer Steuereinheit 30 hinterlegt werden.

Es wird im Rahmen des Verfahrens angenommen, dass die Temperatur 17 der Spule 27 zumindest weitgehend der Temperatur 17 des Getriebefluids 14 entspricht. Damit kann aus der Temperatur 17 der Spule 27 auf die Temperatur 17 des Getriebefluids 14 geschlossen werden und somit einerseits der in Schritt b) ermittelte (temperaturabhängige) Sensormesswert 16 in Kenntnis der in Schritt c) ermittelten Temperatur 17 interpretiert werden. Andererseits kann über die in Schritt c) ermittelte Temperatur 17 die Viskosität des Getriebefluids 14 bestimmt werden und damit die Geschwindigkeit der durch das Getriebefluid 14 bewegten Komponenten Kolben 11 und Kupplung 5 ermittelt werden. Damit ist ausgehend von der Ist-Position 18 des Kolbens 11 (Schritt d) ein zweites Zeitintervall bestimmbar, nach dem der Kolben 11, ausgehend von der Ist-Position 18, die Endposition 13 erreicht.

Durch das Verfahren kann der Kolben 11 aus einer genau(-er) bestimmten Ist-Position 18 weiter in die Endposition 13 verlagert werden. Dabei kann die Geschwindigkeit des Kolbens 11 ebenfalls in Abhängigkeit von der ermittelten Temperatur 17 bestimmt werden. Das Erreichen des ersten Zustands 15 kann daher mit einer erhöhten Genauigkeit bestimmt werden, so dass die Freigabe zur Übertragung eines Drehmoments über die Kupplungskomponenten 8, 9 nun schneller erfolgen kann.

Gemäß Variante ii. des Verfahrens wird die Temperatur 17 des Getriebefluids 14 (Schritt c)) anhand eines ersten Zeitintervalls zwischen Betätigen des Aktuators 10 gemäß Schritt a) und dem Detektieren einer von dem Kolben 11 erreichten Zwischenposition 20 durch den Sensor 7 ermittelt. Dabei wird davon ausgegangen, dass das erste Zeitintervall in Abhängigkeit von der Viskosität des Getriebefluids 14 (und damit von der Temperatur 17 des Getriebefluids 14) variiert.

Die Ist-Position 18 des Kolbens 11 wird in Schritt d) aus einem Kennfeld 21 bestimmt. In dem Kennfeld 21 sind Korrekturfaktoren für die Sensormesswerte 16 in Abhängigkeit von der Temperatur 17 hinterlegt. Damit kann der in Schritt b) ermittelte Sensormesswert 16 interpretiert werden und so die Ist-Position 18 des Kolbens 11 mit höherer Genauigkeit bestimmt werden.

Insbesondere ist für den (in Schritt b) ermittelten, temperaturabhängigen) Sensormesswert 16 ein Schwellwert 22 definiert, wobei, wenn der in Schritt b) ermittelte Sensormesswert 16 dem Schwellwert 22 entspricht, angenommen wird, dass der Kolben 11 aus der Ausgangsposition 12 in die Zwischenposition 20 verlagert ist, wobei die Kupplungskomponenten 8, 9 in der Zwischenposition 20 des Kolbens 11 (gerade noch) nicht formschlüssig miteinander verbunden sind. Dabei wird der Schwellwert 22 so festgelegt, dass einerseits eine formschlüssige Verbindung der Kupplungskomponenten 8, 9 in jedem Fall noch nicht vorliegt (gerade bei niedriger Temperatur 17) und andererseits (z. B. bei hoher Temperatur 17) eine formschlüssige Verbindung nach Überschreiten des Schwellwerts 22 unmittelbar vorliegt.

Bei dem Verfahren wird anhand der (in Schritt c) ermittelten Temperatur 17 ein zweites Zeitintervall bestimmt, in dem der Kolben 11 ausgehend von der Ist-Position 18 die Endposition 13 erreicht; wobei das zweite Zeitintervall für die Durchführung des Schrittes e) berücksichtigt wird. Damit kann der Kolben 11 nun aus der genau(-er) bestimmten Ist-Position 18 weiter in die Endposition 13 verlagert werden, wobei die Geschwindigkeit des Kolbens 11 ebenfalls in Abhängigkeit von der ermittelten Temperatur 17 bestimmt werden kann. Das Erreichen des ersten Zustands 15 kann daher mit einer erhöhten Genauigkeit bestimmt werden, so dass die Freigabe zur Übertragung eines Drehmoments über die Kupplungskomponenten 8, 9 nun schneller erfolgt.

Das zweite Zeitintervall wird ebenfalls aus einem (weiteren) Kennfeld 21 bestimmt. In diesem (weiteren) Kennfeld 21 sind Werte des zweiten Zeitintervalls in Abhängigkeit von der ermittelten Temperatur 17 hinterlegt.

Weiter wird vorgeschlagen, dass zum Messen des elektrischen Widerstands 19 des Aktuators 10 (z. B. der Spule 27 des Aktuators 10) der Aktuator 10 mit einem Testsignal 23, umfassend einen elektrischen Strom und eine elektrischen Spannung, beaufschlagt wird, wobei der Kolben 11 durch das Testsignal 23 nicht bewegt wird. Aus der Messung des elektrischen Widerstands 19 (Variante i. des Verfahrens) kann so die Temperatur 17 des Getriebefluids 14 hinreichend genau bestimmt werden.

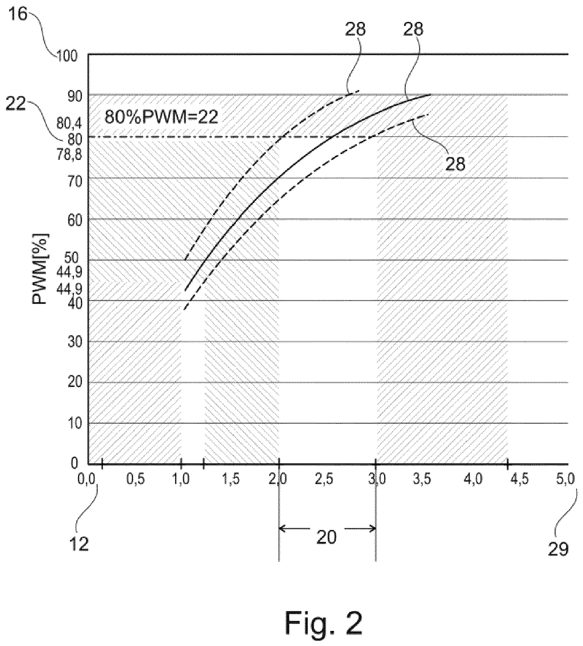

Fig. 2 zeigt ein Diagramm mit mehreren Kennlinien 28 eines Sensors. Dabei ist hier auf der vertikalen Achse der in Schritt b) gemessene Sensormesswert 16 aufgetragen. Auf der horizontalen Achse ist die Position des Kolbens 11, also der Weg 29, ausgehend von einer Ausgangsposition 12, aufgetragen.

Die drei Kennlinien 28 verdeutlichen die Abhängigkeit des Sensormesswerts 16 von der Temperatur 17. Die mittlere Kennlinie 28 zeigt die Kennlinie 28 des Sensors 7 bei einer mittleren Temperatur 17, z. B. bei 20 Grad Celsius. Die untere, gestrichelt dargestellte Kennlinie 28 zeigt die Kennlinie 28 des Sensors 7 bei einer niedrigen Temperatur 17, z. B. bei -20 Grad Celsius. Die obere, gestrichelt dargestellte Kennlinie 28 zeigt die Kennlinie 28 des Sensors 7 bei einer hohen Temperatur 17, z. B. bei 60 Grad Celsius.

Für den (in Schritt b) ermittelten, temperaturabhängigen) Sensormesswert 16 ist ein Schwellwert 22 definiert, wobei, wenn der in Schritt b) ermittelte Sensormesswert 16 dem Schwellwert 22 entspricht, angenommen wird, dass der Kolben 11 aus der Ausgangsposition 12 in die Zwischenposition 20 verlagert ist, wobei die Kupplungskomponenten 8, 9 in der Zwischenposition 20 des Kolbens 11 (gerade noch) nicht formschlüssig miteinander verbunden sind. Dabei wird der Schwellwert 22 so festgelegt, dass einerseits eine formschlüssige Verbindung der Kupplungskomponenten 8, 9 in jedem Fall noch nicht vorliegt (gerade bei niedriger Temperatur 17, hier also untere Kennlinie 28) und andererseits (z. B. bei hoher Temperatur 17, hier also obere Kennlinie 28) eine formschlüssige Verbindung der Kupplungskomponenten 8, 9 nach Überschreiten des Schwellwerts 22 unmittelbar vorliegt.

Mit Erreichen des Schwellwerts 22 ist der Kolben 11 also in einer Zwischenposition 20, in der eine formschlüssige Verbindung der Kupplungskomponenten 8, 9 in jedem Fall noch nicht vorliegt. Durch das Messen eines ersten Zeitintervalls zwischen Betätigen des Aktuators 10 gemäß Schritt a) (zu diesem Zeitpunkt befindet sich der Kolben 11 in der Ausgangsposition 12) und dem Detektieren einer von dem Kolben 11 erreichten Zwischenposition 20 durch den Sensor 7, kann die Geschwindigkeit des Kolbens 11 bei der Bewegung durch das Getriebefluid 14 ermittelt werden. Aus der Geschwindigkeit des Kolbens 11 kann auf die Viskosität des Getriebefluids 14 geschlossen werden und damit auf dessen Temperatur 17. Anhand der Temperatur 17 kann die entsprechende Kennlinie 28 für den Sensor 7 ausgewählt werden und so die Ist-Position 18 des Kolbens hinreichend genau bestimmt werden. Ausgehend von der Ist-Position 18 des Kolbens 11 (Schritt d) ist dann (unter Berücksichtigung der Viskosität des Getriebefluids 14) ein zweites Zeitintervall bestimmbar, nach dem der Kolben 11, ausgehend von der Ist-Position 18, die Endposition 13 erreicht.

### Bezugszeichenliste

- 1: Antriebsstrang
- 2: Fahrzeug
- 3: Getriebegehäuse
- 4: Kupplungsaggregat
- 5: Kupplung
- 6: Betätigungseinheit
- 7: Sensor
- 8: erste Kupplungskomponente
- 9: zweite Kupplungskomponente
- 10: Aktuator
- 11: Kolben
- 12: Ausgangsposition
- 13: Endposition
- 14: Getriebefluid
- 15: erster Zustand
- 16: Sensormesswert
- 17: Temperatur
- 18: Ist-Position
- 19: Widerstand
- 20: Zwischenposition
- 21: Kennfeld
- 22: Schwellwert
- 23: Testsignal
- 24: Sensorscheibe
- 25: Tellerfeder
- 26: Gleitscheibe
- 27: Spule
- 28: Kennlinie
- 29: Weg
- 30: Steuereinheit

## Patentansprüche

1. Verfahren zum Betrieb eines Antriebsstranges (1) eines Fahrzeugs (2), wobei der Antriebstrang (1) zumindest ein Getriebegehäuse (3) und ein darin angeordnetes Kupplungsaggregat (4) mit einer formschlüssig wirkenden Kupplung (5) sowie eine Betätigungseinheit (6) zur Betätigung der Kupplung (5) und einen Sensor (7) zur Ermittlung des Kupplungszustands aufweist; wobei die Kupplung (5) zumindest eine erste Kupplungskomponente (8) und eine zweite Kupplungskomponente (9) umfasst, die bei Betätigung der Kupplung (5) formschlüssig miteinander verbunden werden; wobei die Betätigungseinheit (6) einen elektromagnetischen Aktuator (10) mit einem Kolben (11) umfasst; wobei der Kolben (11) zur Betätigung der Kupplung (5) aus einer Ausgangsposition (12) in eine Endposition (13) verlagert wird; wobei zumindest der Kolben (11) und die Kupplung (5) zumindest teilweise von einem Getriebefluid (14) beaufschlagt werden; wobei eine Übertragung eines Drehmomentes über die Kupplungskomponenten (8, 9) erst nach Feststellung eines vollständig eingerückten ersten Zustandes (15) der Kupplungskomponenten (8, 9) erfolgt, bei dem der Kolben (11) in der Endposition (13) angeordnet ist; wobei mit dem Sensor (7) eine Lage des Kolbens (11) feststellbar ist; wobei das Verfahren zumindest die folgenden Schritte umfasst:
a) Betätigen des Aktuators (10) und Bewegen des Kolbens (11) aus der Ausgangsposition (12);
b) Ermitteln eines Sensormesswertes (16);
c) Ermitteln einer Temperatur (17) des Getriebefluids (14);
d) Bestimmen einer Ist-Position (18) des Kolbens (11) anhand des Sensormesswertes (16) und der Temperatur (17); und
e) Bewegen des Kolbens (11) ausgehend von der bestimmten Ist-Position (18) in die Endposition (13);
**dadurch gekennzeichnet, dass** die Temperatur (17) des Getriebefluids (14) zumindest durch
i. Messen eines elektrischen Widerstands (19) des Aktuators (10) oder
ii. Messen eines ersten Zeitintervalls zwischen Betätigen des Aktuators (10) gemäß Schritt a) und dem Detektieren einer von dem Kolben (11) erreichten Zwischenposition (20) durch den Sensor (7)
ermittelt wird.

2. Verfahren nach Patentanspruch 1, wobei der Sensormesswert (16) kontinuierlich während der Verlagerung des Kolbens (11) ermittelt wird.

3. Verfahren nach einem der vorhergehenden Patentansprüche, wobei der Sensormesswert (16) temperaturabhängig ist und die Ist-Position (18) des Kolbens (11) in Schritt d) unter Berücksichtigung der ermittelten Temperatur (17) aus einem Kennfeld (21) bestimmt wird.

4. Verfahren nach einem der vorhergehenden Patentansprüche, wobei für den Sensormesswert (16) ein Schwellwert (22) definiert ist, wobei, wenn der in Schritt b) ermittelte Sensormesswert (16) dem Schwellwert (22) entspricht, festgelegt wird, dass der Kolben (11) aus der Ausgangsposition (12) in die Zwischenposition (20) verlagert ist, wobei die Kupplungskomponenten (8, 9) in der Zwischenposition (20) nicht formschlüssig miteinander verbunden sind.

5. Verfahren nach einem der vorhergehenden Patentansprüche, wobei anhand der ermittelten Temperatur (17) ein zweites Zeitintervall bestimmt wird, in dem der Kolben (11) ausgehend von der Ist-Position (18) die Endposition (13) erreicht; wobei die Durchführung des Schrittes e) auf das zweite Zeitintervall abgestimmt wird.

6. Verfahren nach Patentanspruch 5, wobei das zweite Zeitintervall aus einem Kennfeld (21) bestimmt wird.

7. Verfahren nach einem der vorhergehenden Patentansprüche, wobei der Aktuator (10) zum Messen des elektrischen Widerstands (19) des Aktuators (10) mit einem Testsignal (23), umfassend einen elektrischen Strom und eine elektrische Spannung, beaufschlagt wird, wobei der Kolben (11) durch das Testsignal (23) nicht bewegt wird.

8. Antriebsstrang (1) eines Fahrzeuges (2), zumindest aufweisend ein Getriebegehäuse (3) und ein darin angeordnetes Kupplungsaggregat (4) mit einer formschlüssig wirkenden Kupplung (5) sowie eine Betätigungseinheit (6) zur Betätigung der Kupplung (5) und einen Sensor (7) zur Ermittlung des Kupplungszustands; wobei die Kupplung (5) zumindest eine erste Kupplungskomponente (8) und eine zweite Kupplungskomponente (9) umfasst, die bei Betätigung der Kupplung (5) formschlüssig miteinander verbindbar sind; wobei die Betätigungseinheit (6) einen elektromagnetischen Aktuator (10) mit einem Kolben (11) umfasst; wobei der Kolben (11) zur Betätigung der Kupplung (5) aus einer Ausgangsposition (12) in eine Endposition (13) verlagerbar ist; wobei zumindest der Kolben (11) und die Kupplung (5) zumindest teilweise von einem Getriebefluid (14) beaufschlagt sind; wobei eine Übertragung eines Drehmomentes über die Kupplungskomponenten (8, 9) erst nach Feststellung eines vollständig eingerückten ersten Zustandes (15) der Kupplungskomponenten (8, 9) erfolgt, für den der Kolben (11) in der Endposition (13) angeordnet ist; wobei über den Sensor (7) eine Lage des Kolbens (11) feststellbar ist; wobei der Antriebsstrang (1) zur Durchführung des Verfahrens nach einem der vorhergehenden Patentansprüche geeignet und eingerichtet ist.

## Claims

1. Method for operating a drive train (1) of a vehicle (2), wherein the drive train (1) has at least a transmission housing (3), and a clutch unit (4) situated therein with a clutch (5) that acts in a form-fit manner, as well as an actuating unit (6) for actuating the clutch (5), and a sensor (7) for determining the coupling status; wherein the clutch (5) includes at least a first clutch component (8) and a second clutch component (9) that are connected to one another in a form-fit manner when the clutch (5) is actuated; wherein the actuating unit (6) includes an electromagnetic actuator (10) having a piston (11); wherein for actuating the clutch (5) the piston (11) is moved from a starting position (12) into an end position (13); wherein at least the piston (11) and the clutch (5) are acted on at least partially by a transmission fluid (14); wherein a torque is transmitted via the clutch components (8, 9) only after a fully engaged first state (15) of the clutch components (8, 9) is determined in which the piston (11) is in the end position (13); wherein a position of the piston (11) may be determined with the sensor (7); wherein the method includes at least the following steps:
a) actuating the actuator (10) and moving the piston (11) from the starting position (12);
b) ascertaining a measured sensor value (16);
c) ascertaining a temperature (17) of the transmission fluid (14);
d) determining an actual position (18) of the piston (11) based on the measured sensor value (16) and the temperature (17); and
e) moving the piston (11), starting from the determined actual position (18), into the end position (13);
**characterized in that** the temperature (17) of the transmission fluid (14) is ascertained at least by
i. measuring an electrical resistance (19) of the actuator (10) or
ii. measuring a first time interval between actuation of the actuator (10) according to step a) and the detection by the sensor (7) of an intermediate position (20) that is reached by the piston (11).

2. Method according to Claim 1, wherein the measured sensor value (16) is determined continuously during the displacement of the piston (11).

3. Method according to one of the preceding claims, wherein the measured sensor value (16) is a function of temperature, and the actual position (18) of the piston (11) is determined in step d) from a characteristic map (21), taking the determined temperature (17) into account.

4. Method according to one of the preceding claims, wherein a threshold value (22) is defined for the measured sensor value (16), and when the measured sensor value (16) determined in step b) corresponds to the threshold value (22), it is assumed that the piston (11) has moved from the starting position (12) into the intermediate position (20), wherein the clutch components (8, 9) in the intermediate position (20) are not connected to one another in a form-fit manner.

5. Method according to one of the preceding claims, wherein based on the determined temperature (17), a second time interval is determined in which the piston (11), starting from the actual position (18), reaches the end position (13); wherein carrying out step e) is coordinated with the second time interval.

6. Method according to Claim 5, wherein the second time interval is determined from a characteristic map (21).

7. Method according to one of the preceding claims, wherein for measuring the electrical resistance (19) of the actuator (10), the actuator (10) is acted on by a test signal (23) that includes an electric current and a voltage, wherein the piston (11) is not moved by the test signal (23).

8. Drive train (1) of a vehicle (2), including at least a transmission housing (3), and a clutch unit (4) situated therein with a clutch (5) that acts in a form-fit manner, as well as an actuating unit (6) for actuating the clutch (5), and a sensor (7) for determining the coupling status; wherein the clutch (5) includes at least a first clutch component (8) and a second clutch component (9) that are connectable to one another in a form-fit manner when the clutch (5) is actuated; wherein the actuating unit (6) includes an electromagnetic actuator (10) having a piston (11); wherein the piston (11) is movable from a starting position (12) into an end position (13) in order to actuate the clutch (5); wherein at least the piston (11) and the clutch (5) are acted on at least partially by a transmission fluid (14); wherein transmission of a torque via the clutch components (8, 9) does not occur until a fully engaged first state (15) of the clutch components (8, 9) is determined for which the piston (11) is in the end position (13); wherein a position of the piston (11) may be determined with the sensor (7); wherein the drive train (1) is suited and configured for carrying out the method according to one of the preceding claims.

## Revendications

1. Procédé d'exploitation d'une chaîne cinématique (1) d'un véhicule (2), dans lequel la chaîne cinématique (1) comprend au moins un carter de transmission (3) et un ensemble d'embrayage (4) agencé dans celui-ci, muni d'un embrayage (5) agissant par complémentarité de forme, ainsi qu'une unité d'actionnement (6) pour l'actionnement de l'embrayage (5) et un capteur (7) pour la détermination de l'état de l'embrayage; dans lequel l'embrayage (5) comprend au moins un premier composant d'embrayage (8) et un deuxième composant d'embrayage (9), qui sont reliés l'un avec l'autre par complémentarité de forme lors de l'actionnement de l'embrayage (5); dans lequel l'unité d'actionnement (6) comprend un actionneur électromagnétique (10) muni d'un piston (11); dans lequel le piston (11) est déplacé d'une position initiale (12) dans une position finale (13) pour l'actionnement de l'embrayage (5); dans lequel au moins le piston (11) et l'embrayage (5) sont au moins partiellement sollicités par un fluide de transmission (14); dans lequel un transfert d'un moment de rotation par l'intermédiaire des composants d'embrayage (8, 9) n'a lieu qu'après l'établissement d'un premier état complètement embrayé (15) des composants d'embrayage (8, 9), selon lequel le piston (11) est agencé dans la position finale (13); dans lequel une situation du piston (11) peut être établie avec le capteur (7); le procédé comprenant au moins les étapes suivantes:
a) l'actionnement de l'actionneur (10) et le déplacement du piston (11) depuis la position initiale (12);
b) la détermination d'une valeur de mesure de capteur (16);
c) la détermination d'une température (17) du fluide de transmission (14);
d) la détermination d'une position réelle (18) du piston (11) à partir de la valeur de mesure de capteur (16) et de la température (17); et
e) le déplacement du piston (11) à partir de la position réelle déterminée (18) dans la position finale (13);
**caractérisé en ce que**
la température (17) du fluide de transmission (14) est déterminée au moins par:
i. mesure d'une résistance électrique (19) de l'actionneur (10) ou
ii. mesure d'un premier intervalle de temps entre l'actionnement de l'actionneur (10) selon l'étape a) et la détection d'une position intermédiaire (20) atteinte par le piston (11) par le capteur (7).

2. Procédé selon la revendication 1, dans lequel la valeur de mesure de capteur (16) est déterminée en continu pendant le déplacement du piston (11).

3. Procédé selon l'une quelconque des revendications précédentes, dans lequel la valeur de mesure de capteur (16) est dépendante de la température et la position réelle (18) du piston (11) est déterminée dans l'étape d) en prenant en compte la température déterminée (17) à partir d'un diagramme caractéristique (21).

4. Procédé selon l'une quelconque des revendications précédentes, dans lequel une valeur de seuil (22) est définie pour la valeur de mesure de capteur (16), dans lequel, lorsque la valeur de mesure de capteur (16) déterminée dans l'étape b) correspond à la valeur de seuil (22), il est établi que le piston (11) est déplacé de la position initiale (12) dans la position intermédiaire (20), dans lequel les composants d'embrayage (8, 9) ne sont pas reliés l'un avec l'autre par complémentarité de forme dans la position intermédiaire (20).

5. Procédé selon l'une quelconque des revendications précédentes, dans lequel un deuxième intervalle de temps est déterminé à partir de la température déterminée (17), pendant lequel le piston (11) atteint la position finale (13) à partir de la position réelle (18); dans lequel la réalisation de l'étape e) est adaptée au deuxième intervalle de temps.

6. Procédé selon la revendication 5, dans lequel le deuxième intervalle de temps est déterminé à partir d'un diagramme caractéristique (21).

7. Procédé selon l'une quelconque des revendications précédentes, dans lequel l'actionneur (10) est sollicité avec un signal d'essai (23), comprenant un courant électrique et une tension électrique, pour la mesure de la résistance électrique (19) de l'actionneur (10), dans lequel le piston (11) n'est pas déplacé par le signal d'essai (23).

8. Chaîne cinématique (1) d'un véhicule (2), comprenant au moins un carter de transmission (3) et un ensemble d'embrayage (4) agencé dans celui-ci, muni d'un embrayage (5) agissant par complémentarité de forme, ainsi qu'une unité d'actionnement (6) pour l'actionnement de l'embrayage (5) et un capteur (7) pour la détermination de l'état de l'embrayage; dans laquelle l'embrayage (5) comprend au moins un premier composant d'embrayage (8) et un deuxième composant d'embrayage (9), qui peuvent être reliés l'un avec l'autre par complémentarité de forme lors de l'actionnement de l'embrayage (5); dans laquelle l'unité d'actionnement (6) comprend un actionneur électromagnétique (10) muni d'un piston (11); dans laquelle le piston (11) peut être déplacé d'une position initiale (12) dans une position finale (13) pour l'actionnement de l'embrayage (5); dans laquelle au moins le piston (11) et l'embrayage (5) sont au moins partiellement sollicités par un fluide de transmission (14); dans laquelle un transfert d'un moment de rotation par l'intermédiaire des composants d'embrayage (8, 9) n'a lieu qu'après l'établissement d'un premier état complètement embrayé (15) des composants d'embrayage (8, 9), pour lequel le piston (11) est agencé dans la position finale (13); dans laquelle une situation du piston (11) peut être établie par l'intermédiaire du capteur (7); la chaîne cinématique (1) étant appropriée et conçue pour la réalisation du procédé selon l'une quelconque des revendications précédentes.
